# EUROPÄISCHE PATENTSCHRIFT

(11) **EP 1 370 337 B1**
(45) Veröffentlichungstag und Bekanntmachung des Hinweises auf die Patenterteilung: **14.09.2005**
(21) Anmeldenummer: 02722121.7
(22) Anmeldetag: 22.02.2002
(51) Int. Cl.: B01D 29/41, B01D 35/153, B01D 35/16, B01D 35/30, B01D 36/00

(54) **FILTERMODUL, EINBAUSATZ FÜR EIN FILTERMODUL UND FILTERVORRICHTUNG**
FILTER MODULE, INSTALLATION KIT FOR A FILTER MODULE AND A FILTER DEVICE
MODULE DE FILTRAGE, INSERT DE MODULE DE FILTRAGE, ET DISPOSITIF DE FILTRAGE

(30) Priorität: 08.03.2001 DE 10111064
(43) Veröffentlichungstag der Anmeldung: 17.12.2003
(73) Patentinhaber: PALL CORPORATION, East Hills, New York 11548 (US)
(72) Erfinder: DIEMER, Wolfgang, 73550 Waldstetten (DE); ZEILER, Martin, 73527 Schwäbisch Gmünd (DE)
(74) Vertreter: Hoeger, Stellrecht & Partner Patentanwälte
(86) Internationale Anmeldenummer: PCT/EP2002/001892
(87) Internationale Veröffentlichungsnummer: WO 2002/070102

(56) Entgegenhaltungen:
- WO-A-98/23356
- GB-A- 2 061 123
- US-A- 3 727 764

## Beschreibung

Die Erfindung betrifft ein Modul zum Filtrieren von Medien gemäß den Merkmalen des Oberbegriffs des Patentanspruchs 1. Die Erfindung bezieht sich auch auf eine Filtervorrichtung mit einem Filtergehäuse, in das das Filtermodul oder die Filtermodule eingebaut ist/sind.

Unter Filterzellen werden alle Bauarten von Filterzellen verstanden, wobei die vom Medium durchströmbaren porösen, flächigen Bauteile bevorzugt Filterschichten aus den bekannten Grundstoffen, d.h. im wesentlichen Zellulose- und/oder Kunststofffasern sowie Kieselgur sind.

Filtervorrichtungen bestehen im wesentlichen aus einem wiederverwendbaren Filtergehäuse und den dazugehörigen Anschlüssen für Filtrat und Unfiltrat sowie aus austauschbaren Filtern, wie Filterkerzen oder Filterzellen aufweisenden Filtermodulen. Bei den herkömmlichen Filtervorrichtungen ist der Kontakt zwischen Unfiltrat/Filtrat und Gehäuse unvermeidlich, so daß eine Reinigung des Filtergehäuses nach Gebrauch, d.h. nach dem Entfernen des gebrauchten Filters notwendig ist. Eine Crosskontamination von Charge zu Charge kann hierbei trotzdem nicht ausgeschlossen werden.

Ein weiterer Nachteil besteht darin, daß ein Kontakt des Bedienungspersonals mit verunreinigten Filterkerzen oder Filtermodulen sowie Gehäuseteilen unvermeidlich ist, was insbesondere bei toxischen oder infektiösen Verunreinigungen des gebrauchten Filtermoduls oder bei gefährlichen gasförmigen Stoffen im Unfiltratraum äußerst problematisch ist.

Die produktberührenden Teile des Filtergehäuses müssen gegenüber dem Unfiltrat/Filtrat beständig sein, was wiederum verschiedene Gehäusevarianten notwendig macht. Damit ist der Nachteil verbunden, daß die Filtergehäuse nicht standardisiert werden können und eine Anpassung an das jeweilige Medium erforderlich ist.

In besonderen Anwendungsfällen müssen die Filtermodule vor Gebrauch gespült und sterilisiert werden. Außerdem ist ein tropffreies Entfernen des Filtermoduls aus dem Filtergehäuse ebensowenig möglich wie eine vollkommene Restfiltration, was insbesondere bei teuren Medien einen erheblichen Nachteil darstellt.

Es wurde daher bereits versucht, diese Probleme durch eine Kapselung der Filterkerzen bzw. Filtermodule zu lösen, wodurch aber noch nicht alle Probleme gelöst werden konnten.

So beschreibt beispielsweise die DE 35 20 139 C2 eine Filtervorrichtung für Gase oder Flüssigkeiten mit einer Filterkerze, die an einem Adapter mit zwei Öffnungen für Filtrat und Unfiltrat befestigt ist. An diesem Adapter ist ein mediendichter Mantel in Form eines Schlauches befestigt, der die Filterpatrone umgreift und der sich während der Filtration an den Wänden des Filterbechers anlegt.

Beim Filterwechsel kann jedoch Flüssigkeit aus dem Raum zwischen dem Zuführstutzen bzw. dem Abflußstutzen und dem nachgeordneten Absperrorgan nach außen und auf den Deckel fließen. Dies macht zusätzliche Reinigungsarbeiten erforderlich. -

Eine entsprechende Kapselung von mehreren Filterkerzen wird in der DE 38 07 828 C2 erläutert.

In einer Weiterentwicklung der Filterkerzenkapselung, die in der DE 38 08 602 C2 beschrieben ist, werden zur Vermeidung dieser Nachteile Modifikationen an Gehäuse sowie an Zu- und Abführstutzen vorgenommen. Der größte Nachteil dieser Vorrichtung besteht darin, daß beim Vorsehen eines Filtersacks immer auch Anpassungen an Gehäuse und Anschlüsse vorgenommen werden müssen, so daß das sogenannte Standardgehäuse nicht mehr verwendet werden kann. Eine Nachrüstung von Filterkerzen mit Filtersäcken ist somit nicht möglich. Außerdem bleiben im Zwischenraum zwischen Filtrat und Unfiltrat immer größere Mengen Flüssigkeit zurück, die verworfen werden müssen. Aggressive oder toxische Medien behindern somit die Entsorgung der Filterkerzen. Dies gilt auch für Filtervorrichtungen auf der Basis von Filterzellen aufweisenden Filtermodulen.

In der WO 98/23356 wird eine Filtervorrichtung mit einem Filtermodul beschrieben. Als nachteilig bei herkömmlichen Filtervorrichtungen wurde angesehen, daß nach dem Entfernen verbrauchter Filtermodule das Gehäuse gereinigt werden muß, um Kontaminationen nachfolgender Flüssigkeiten zu verhindern. Außerdem sammelt sich am Auslauf des Gehäuses Restflüssigkeit, so daß das Gehäuse geöffnet bzw. entleert werden muß, was zeitaufwendig und kostenintensiv ist. Es wurde daher vorgeschlagen, die Filtermodule vollständig zu kapseln, wofür ein zweiteiliges druckfestes und druckdichtes Kapselgehäuse vorgesehen ist, das zusammen mit dem Filtermodul entfernt und entsorgt wird. Dieses Kapselgehäuse ist direkt in die zu- und abführende Rohrleitung frei und ohne zusätzliches Filtergehäuse eingebaut. Der Ein- und Ausbau dieses Kapselgehäuses zum Zwecke der Entsorgung und zum Austausch von Filtermodul mit Kapselgehäuse ist daher aufwendig. Weiterhin tritt Restflüssigkeit aus dem geöffneten Stutzen des Kapselgehäuses und der zu- und abführenden Rohrleitungen aus, was bei aggressiven, teuren und toxischen Medien sehr nachteilig ist. Dieses Kapselgehäuse benötigt relativ viel Platz, so daß entweder eine Anpassung des Filtergehäuses oder eine Verkleinerung der Filtermodule vorgenommen werden muß. Darüber hinaus ist dieses druckdichte Innengehäuse, das nur einmalig verwendet wird, in der Herstellung aufwendig und teuer. Ein weiterer Nachteil dieser sogenannten Einweggehäuse besteht darin, daß diese nicht für Filtermodule mit Filterflächen > 1 m² herstellbar sind.

Eine kapselung von mehreren auf einander gestapelten Filterzellen wird in der US 3 727 764 beschrieben.

Es ist daher Aufgabe der Erfindung, ein gekapseltes Filtermodul sowie eine Filtervorrichtung zu schaffen, die die Nachteile bekannter Filtermodule und Filtervorrichtungen nicht aufweisen. Insbesondere soll bei geringem Kostenaufwand für die Herstellung der Filtermodule eine Restfiltration möglich sein, sowie eine Kontamination des Gehäuses weitgehend vermieden werden und Standardmodule und Standardgehäuse verwendbar sein.

Diese Aufgabe wird mit einem Modul gelöst, das dadurch gekennzeichnet ist, daß die Kapseleinrichtung eine mediendichte Hülle und zwei Halteringe umfaßt, daß die Hülle an den Halteringen mediendicht befestigt ist, und daß jeweils ein Haltering an einem Adapter angeordnet ist.

Die Hülle bildet eine sogenannte weiche Kapselung, die das Filterzellenpaket umgibt und gegenüber dem Außenraum mediendicht abschließt. Das Vorsehen von Halteringen ermöglicht eine einfache Anbringung der Hülle, ohne daß an den Adaptern Änderungen vorgenommen werden müssen. Insgesamt benötigt die Kapseleinrichtung keinen zusätzlichen Platz, so daß an den Abmessungen der Filterzellen und des Filtergehäuses nichts geändert werden muß. Es können daher Standardgehäuse und Standardmodule zum Einsatz kommen, die lediglich mit der Hülle versehen werden müssen.

Die Hülle schützt zwar das Gehäuse vor Kontamination, aber beim Herausnehmen des Filtermoduls können noch Reste des Mediums aus der Ein- oder Auslaßöffnung der Kapseleinrichtung austreten. Um ein tropffreies Entfernen zu ermöglichen, weist mindestens ein Haltering in der Einlaß- oder Auslaßöffnung mindestens ein Ventil auf.

Über das oder die Ventile in dem oder den Halteringen, kann der Innenraum des Filtermoduls, d.h. der Raum zwischen den Filterzellen und der Hülle, der je nach Betriebsweise den sogenannten Unfiltratraum oder Filtratraum bildet, mit dem Medium gefüllt und/oder belüftet werden, wobei die Ventile derart ausgestaltet sind, daß sie beim Herausnehmen des Filtermoduls aus dem Filtergehäuse sofort in Schließstellung gehen. Ein Auslaufen von Resten des Mediums wird dadurch wirksam vermieden. Die Anbringung der Ventile in dem oder den Halteringen ermöglicht eine einfache Herstellung, ohne daß die Hülle beschädigt wird.

Die Hülle besteht vorzugsweise aus einem flexiblen und/oder elastischen Material. Je nach Anwendungszweck werden entsprechende Materialien eingesetzt, die toxischen oder aggressiven Medien standhalten bzw. lebensmittelrechtlich unbedenklich sind. Vorzugsweise wird ein Kunststoffmaterial eingesetzt, das zur selben Kunststoffklasse gehört wie die Komponenten des Filtermoduls, d.h. der Filterzellen, Distanzringe, etc., so daß bei der Entsorgung verbrauchter Filtermodule keine Materialtrennung vorgenommen werden muß.

Zur Herstellung der Kapselung wird vorzugsweise eine Schlauchfolie verwendet, die über das Filtermodul quer zur Längsachse gezogen wird, wobei an der Schlauchfolie die Halteringe bereits in der richtigen Lage angeordnet sind. Anschließend werden die offenen Enden des Schlauchs mediendicht verschlossen, vorzugsweise verschweißt.

Herkömmliche Filtermodule besitzen an dem oberen Ende einen napfförmigen Adapter und am unteren Ende einen Steckadapter, der an seiner Außenfläche mindestens einen Dichtring, insbesondere einen O-Ring trägt. Filtermodule mit solchen Adaptern sind verwendbar, wobei je nach Ausgestaltung der Adapter die Halteringe entsprechend angepaßt sein müssen. Es ist damit eine Nachrüstung bestehender Filtermodule möglich.

Wenn die Kapselung bereits bei der Herstellung der Filtermodule vorgesehen werden soll, ist es von Vorteil, wenn beide Adapter gleich sind, weil dann an beiden Modulenden dieselben Halteringe zum Einsatz kommen können. Dies senkt die Herstellungskosten.

Vorzugsweise werden die Steckadapter verwendet, die an ihrer Außenseite mindestens ein Dichtelement, insbesondere einen Dichtring, vorzugsweise einen O-Ring tragen, weil diese bekannten Adapter bereits Befestigungsmittel für den Haltering aufweisen. Die Halteringe werden vorzugsweise bajonettartig auf den Adapter aufgesetzt und befestigt.

Nach der Filtration können sich noch Reste des Mediums im Filtrat- bzw. Unfiltratkanal befinden, die bei der Entnahme des Filtermoduls heraustropfen können. Um dies zu verhindern, sind mindestens im unteren Adapter und im unteren Haltering diese Kanäle verschließende Ventile angeordnet. Die Ventile sind vorzugsweise als Tellerventile ausgebildet.

Um die erfindungsgemäßen Filtermodule in bestehende Filtergehäuse einbauen zu können, ist ein Einbausatz vorgesehen, der mindestens eine ringförmige Bodenplatte und eine Deckplatte aufweist. Die ringförmige Bodenplatte ist derart ausgestaltet, daß sie den Raum zwischen dem Gehäuseboden und dem Filtermodul so weit ausfüllt, daß die Oberseite der Bodenplatte eine Auflagefläche für die Hülle bildet, wobei die Bodenplatte einen Filtrat- oder Unfiltratkanal aufweist, der den Filtrat- oder Unfiltratzulauf des Gehäusebodens mit der am unteren Haltering vorgesehenen Öffnung verbindet. Ferner weist die Bodenplatte Mittel zur Aufnahme des unteren Adapters und des unteren Halteringes des Filtermoduls auf. Die Deckplatte ist so ausgebildet, daß sie den Raum zwischen Gehäusedeckwand und Filtermodul so weit ausfüllt, daß die Unterseite der Deckplatte eine Auflagefläche für die Hülle bildet. Ferner besitzt die Deckplatte Mittel zur Aufnahme des oberen Adapters und des oberen Halteringes.

Die Mittel zur Aufnahme des unteren Adapters umfassen eine Aufnahmebüchse, die derart gestaltet ist, so daß sie in die ursprünglich als Adapteraufnahme vorgesehene Aufnahme in der Bodenwand des Filtergehäuses paßt.

Die Deckplatte ist vorzugsweise zweiteilig ausgebildet und weist eine ringförmige Kopfplatte und einen mittig in die Kopfplatte eingesetzten Verteilerkopf auf.

Der Verteilerkopf kann mehrere Entlüftungskanäle aufweisen. Vorzugsweise besitzt der Verteilerkopf einen Entlüftungskanal für den Filtratkanal und/oder einen Entlüftungskanal für den Unfiltratraum, wobei dieser Entlüftungskanal mit dem im oberen Haltering befindlichen Entlüftungsventil in Verbindung steht. Der Entlüftungskanal für den Filtrat- bzw. Unfiltratraum ist beim erstmaligen Befüllen des Filtrat bzw. Unfiltratraums von Bedeutung. Ferner kann der Verteilerkopf einen Kontrollkanal aufweisen, der mit dem zwischen der Hülle und dem Gehäuse befindlichen Raum in Verbindung steht, um eventuelle Undichtigkeiten der Hülle frühzeitig erkennen zu können.

Wenn in das Filtergehäuse zwei oder mehr Filtermodule übereinander angeordnet werden sollen, müssen die Filtrat- bzw. Unfiltraträurne der Filtermodule über die in den Halteringen angeordneten Ventile miteinander verbunden werden. Es ist daher von Vorteil, wenn zwischen den Filtermodulen eine Zwischenplatte angeordnet ist, die eine Öffnung aufweist. Die Zwischenplatte ist derart ausgestaltet, daß der Raum zwischen den Filtermodulen so weit ausgefüllt wird, daß die beiden Stirnflächen jeweils eine Auflagefläche für die Hülle der Filtermodule bildet. Ferner weist diese Zwischenplatte mindestens einen Verbindungskanal auf, der die Ventilöffnungen der in den Halteringen der beiden Filtermodule befindlichen Ventile miteinander verbindet.

Die erfindungsgemäße Filtervorrichtung weist ein Filtergehäuse auf, in dem mindestens ein erfindungsgemäßes Filtermodul gegebenenfalls zusammen mit dem zuvor beschriebenen Einbausatz angeordnet ist. Die Hülle der oder des Filtermoduls ist derart dimensioniert, daß sie während des Filtrationsbetriebes an der Gehäusewand des Filtergehäuses und der benachbarten Komponenten des Einbausatzes anliegt. Zu diesen benachbarten Komponenten zählen im wesentlichen die Bodenplatte, die Deckplatte und ggf. die Zwischenplatte. Dadurch wird gewährleistet, daß die Hülle nicht druckfest ausgestaltet sein muß, weil die Druckkraft von den Komponenten des Einbausatzes bzw. der Gehäusewand aufgenommen und abgestützt wird.

Der Kontrollkanal kann auch dazu genutzt werden, das Befüllen bzw. Entleeren des oder der Filtermodule zu erleichtern. Zu diesem Zweck kann die Filtervorrichtung eine Druckeinrichtung aufweisen, die an den Kontrollkanal angeschlossen ist. Nach Beendigung der Filtration kann durch Anlegen eines Überdrucks die Hülle so weit zusammengedrückt werden, daß Restmengen aus dem Unfiltratraum herausgedrückt werden. Beim Befüllen kann ein Unterdruck angelegt werden, so daß die Hülle sich an die Gehäusewand bzw. die Komponenten des Einbausatzes anlegt.

Nachfolgend werden beispielhafte Ausführungsformen anhand der Zeichnungen näher erläutert.

Es zeigen:
- Figur 1: einen vertikalen Teilschnitt einer Filtervorrichtung gemäß einer ersten Ausführungsform,
- Figur 2: eine vergrößerte Darstellung des oberen Bereichs der in Figur 1 gezeigten Filtervorrichtung,
- Figur 3: eine vergrößerte Darstellung im Bereich der Aufnahmebüchse der in Figur 1 gezeigten Filtervorrichtung, und
- Figur 4: einen Teilschnitt durch eine Filtervorrichtung gemäß einer weiteren Ausführungsform, die mehrere Filtermodule aufweist.

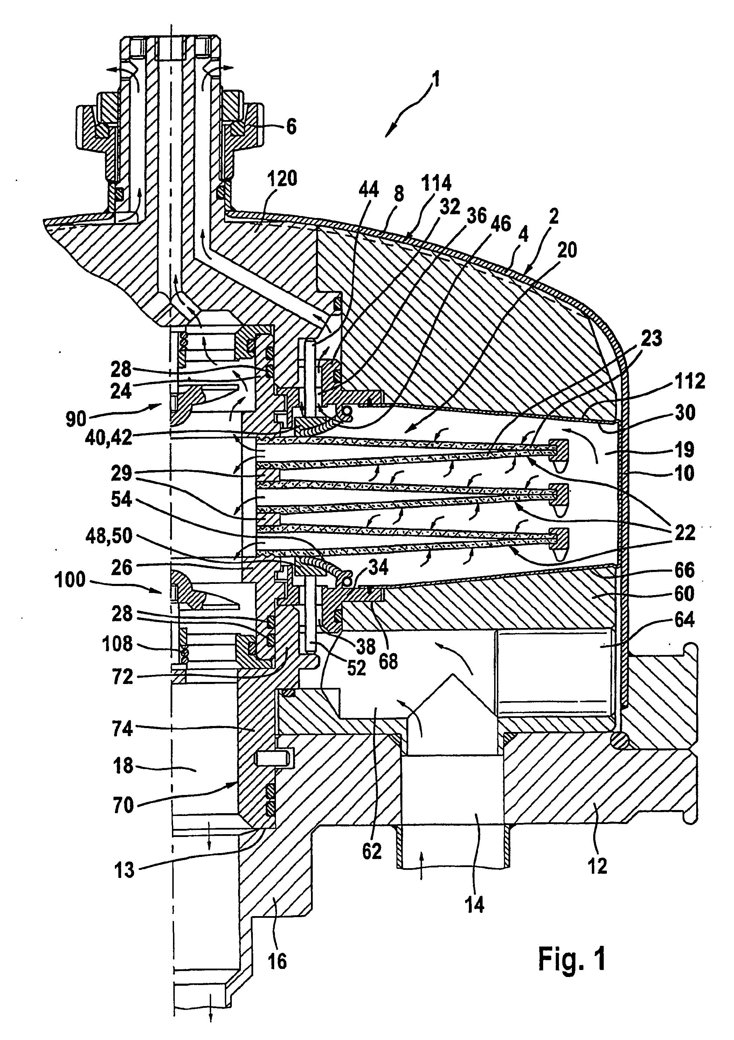

In der Figur 1 ist eine Filtervorrichtung 1 im vertikalen Teilschnitt dargestellt. Die Filtervorrichtung 1 weist ein Filtergehäuse 2 auf, das aus einem Gehäuseoberteil 4 und einem Gehäuseboden 12 besteht. Das Gehäuseoberteil 4 besteht wiederum aus einer Gehäusedeckwand 8, an der mittig, d.h. im Bereich der Mittelachse des Filtergehäuses, ein Gehäusestutzen 6 angeordnet ist, und aus einem sich an die Gehäusedeckwand 8 nach unten erstreckenden Gehäusemantel 10. Das Gehäuseoberteil 4 ist druckdicht und druckfest ausgebildet und mit einer nicht dargestellten Spannvorrichtung mit dem Gehäuseboden 12 verbunden.

Der Gehäuseboden 12 weist einen mittig, d.h. in der Mittelachse der Filtervorrichtung, angeordneten Filtratstutzen 16 und einen exzentrisch angeordneten Unfiltratzulauf 14 auf. Bei umgekehrter Betriebsweise wird das Unfiltrat durch den Stutzen 16 - somit dann Unfiltratstutzen 16 - zugeführt und durch den "Zulauf 14" - d.h. dann Auslauf 14 - abgeführt. Nachfolgend wird der erfindungsgemäße Modul im Zusammenhang mit der ersten Betriebsweise beschrieben.

In dem Filtergehäuse 2 ist ein Filtermodul unter Zuhilfenahme eines aus mehreren Komponenten bestehenden Einbausatzes eingebaut, der später beschrieben wird. Das Filtermodul besitzt in der hier gezeigten, vereinfachten Darstellung drei Filterzellen 22, wobei jede Filterzelle aus zwei scheibenförmigen Filterschichten 23 besteht, die am Außenumfang miteinander verbunden sind. Alle Filterschichten 23 besitzen eine zentrale Öffnung, die zusammen einen Filtratkanal 18 bilden. Zwischen den Filterzellen 22 befinden sich Distanzringe 29.

Am oberen und unteren Ende des Filtratkanals 18 schließen sich an die Filterzellen 22 ein oberer Adapter 24 und ein unterer Adapter 26 an. Die beiden Adapter sind identisch ausgebildet und tragen an ihrer Außenseite jeweils Dichtringe 28. Bis auf die Tatsache, daß die beiden Adapter nicht identisch sind, ist der Aufbau dieses beispielhaften Filtermoduls soweit aus dem Stand der Technik bekannt, so daß nähere Erläuterungen insoweit nicht notwendig sind.

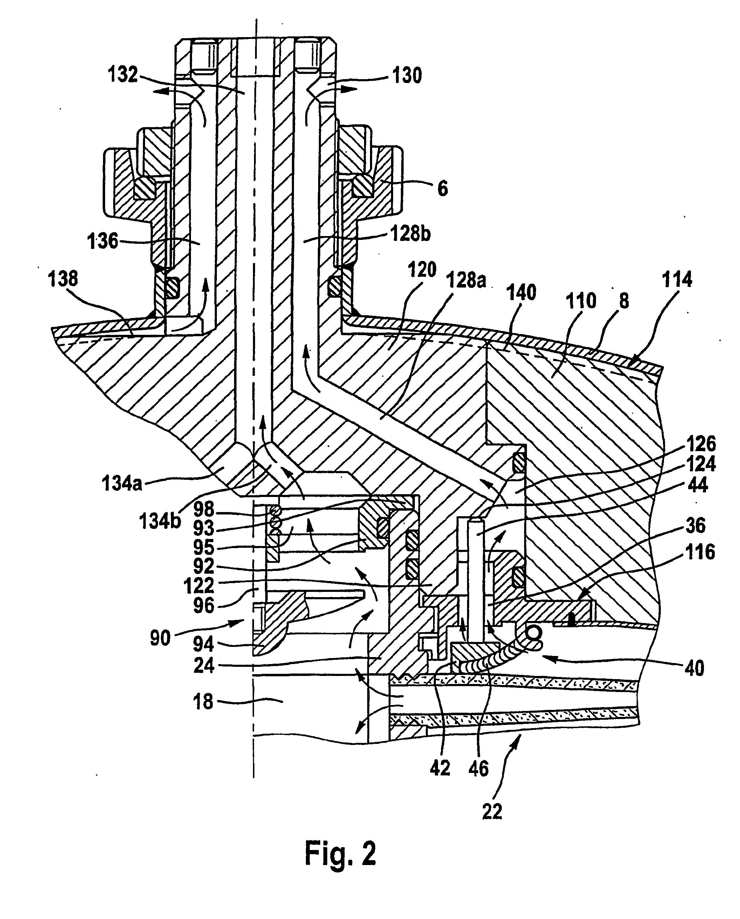

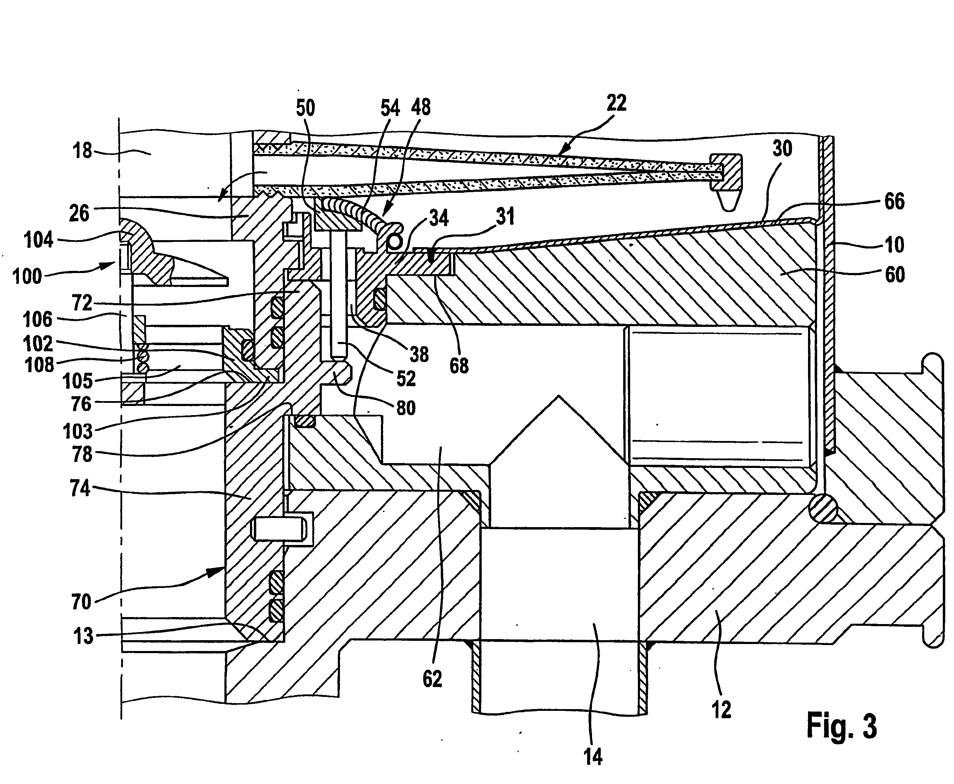

Am oberen und am unteren Adapter 24, 26 ist jeweils ein Haltering 32, 34 angeordnet, der auf die üblicherweise an Adaptern vorhandenen Vorsprünge in Art eines Bajonettverschlusses aufsetzbar sind. An diesen Halteringen 32, 34 ist eine weiche Kapselung in Form einer Hülle 30 befestigt, die in der hier gezeigten Ausführungsform an die Halteringe angeschweißt ist (Schweißnaht 31). Diese Hülle 30, die beispielsweise eine Folie sein kann, umgibt die Filterzellen 22 und ist so dimensioniert, daß sie einerseits an der Innenseite des Gehäusemantels 10 und andererseits an den noch im einzelnen im Zusammenhang mit den Figuren 2 und 3 zu beschreibenden Bauteilen 60, 110 und 120 des Einbausatzes anliegt. Zwischen den Filterzellen und der Hülle 30 wird somit ein Unfiltratraum 19 gebildet.

Sowohl der obere als auch der untere Haltering 32, 34 weist jeweils mindestens ein Ventil 40, 48 auf, die in den Figuren 2 und 3 vergrößert dargestellt sind.

Das Ventil 40 dient als Entlüftungsventil für den Unfiltratraum 19 und das untere Ventil 48 als Zulaufventil für das Unfiltrat in den Unfiltratraum 19. Die Ventile 40, 48 weisen jeweils einen Ventildeckel 42, 50 mit einem Ventilstößel 44, 52 auf. Die Ventildeckel 42, 50 sind über eine Feder 46, 54 mit dem jeweiligen Haltering 32, 34 verbunden.

Der Ventildeckel 50 des Einlaßventils 48 ist im Unfiltratraum 19 angeordnet und verschließt die Ventilöffnung 38, wenn das Filtermodul aus dem Filtergehäuse 2 entfernt wird. Im eingebauten Zustand liegt der Ventilstößel 52 auf einem Vorsprung 80 (s. Figur 3) auf, so daß sich das Einlaßventil 48 im eingebauten Zustand immer in Offenstellung befindet und somit das Einströmen des Unfiltrats in den Unfiltratraum 19 nicht behindert.

Der Ventildeckel 42 befindet sich ebenfalls im Unfiltratraum 19. Im eingebauten Zustand ist das Ventil 48 geöffnet, so daß die beim Einströmen des Unfiltrats in den Unfiltratraum 19 vorhandene Luft über den Entlüftungskanal 128a,b nach außen entweichen kann. Sobald der Unfiltratraum 19 mit Unfiltrat gefüllt ist, kann dann ein Ventil, welches am Auslaß 130 angeordnet ist, aber nicht dargestellt ist, verschlossen werden.

In den beiden Adaptern 24 und 26 sind ferner Adapterventile 90, 100 angeordnet.

Das obere Adapterventil 90 (siehe Fig. 2) weist einen Ventilring 92 auf, der abdichtend in den oberen Adapter 24 eingesetzt ist. Der Ventilring 92 besitzt eine ringförmige Ventilöffnung 95, die von einem Ventilteller 94 mit Ventilstößel 96 verschlossen werden kann. Der Ventilteller 94 ragt in den Filtratkanal 18 und verschließt dann die Ventilöffnung 95, wenn das Filtermodul aus dem Filtergehäuse 2 entnommen wird. Im eingebauten Zustand, wie dies in Figur 2 dargestellt ist, liegt der Ventilstößel 96 an dem Verteilerkopf 120 auf, so daß die Ventilöffnung 95 freigegeben ist.

Das Adapterventil 100 (siehe Fig. 3) im unteren Adapter 26 ist entsprechend aufgebaut, wobei der Ventilteller 104 ebenfalls in den Filtratkanal 18 hineinragt. Der Ventilteller 104 ist ebenfalls so angeordnet, daß er die Ventilöffnung 105 verschließt, wenn das Filtermodul aus dem Filtergehäuse 2 entnommen wird. Die Ventile 90, 100, 40 und 48 ermöglichen somit ein tropffreies Entfernen des Filtermoduls.

Um den Einbau des Filtermoduls in ein herkömmliches Filtergehäuse zu ermöglichen, ist ein Einbausatz vorgesehen, der im Zusammenhang mit den Figuren 2 und 3 näher beschrieben wird.

In der Figur 2 sind die oberen Komponenten des Einbausatzes dargestellt. Die Deckplatte besteht aus einer ringförmigen Kopfplatte 110, deren Außenkontur, wie in der Figur 1 dargestellt ist, an die Innenkontur der Gehäusedeckwand 8 und des Gehäusemantels 10 angepaßt ist. Die Unterseite 112 der Kopfplatte 110 bildet eine Auflagefläche für die Hülle 30. Hierbei ist es wichtig, daß nur ein geringer Abstand zum Gehäusemantel 10 eingehalten wird, damit sich während der Filtration die nicht druckfeste Hülle 30 nicht so weit ausbauchen kann, daß sie beschädigt wird. Ferner besitzt die Kopfplatte 110 eine Ringaufnahme 116 für den oberen Haltering 32.

In die Kopfplatte 110 ist ferner mittig ein Verteilerkopf 120 eingesetzt, der sich durch den Gehäusestutzen 6 nach oben erstreckt. Im Verteilerkopf 120 ist - wie in der Figur 2 zu sehen ist - ein Entlüftungskanal 128a, 128b angeordnet, der mit der Ventilöffnung 36 des Ventils 40 über den Ringraum 126 in Verbindung steht. Dadurch kann die aus dem Unfiltratraum entweichende Luft über den Auslaß 130 am oberen Ende des Verteilerkopfes 120 austreten. Im Bereich des Ringraumes 126 ist ein Widerlager 124 am Verteilerkopf 120 für den Ventilstößel 44 ausgebildet, der im eingebauten Zustand das Ventil 40 in Offenstellung hält. Der Verteilerkopf 120 besitzt ferner einen Ringflansch 122 zur Aufnahme des oberen Adapters 24.

Mittig im Verteilerkopf 120 ist ein Entlüftungskanal 132 mit den Kanalzweigen 134a und b angeordnet, die mit dem Filtratkanal 18 in Verbindung stehen.

Ferner befindet sich im Verteilerkopf 120 ein Kontrollkanal 136, der über die Kanalzweige 138 und 140 mit den Zwischenräumen zwischen der Kopfplatte 110 und dem Gehäuseoberteil 4 und somit auch mit dem Zwischenraum zwischen Hülle 30 und Gehäusemantel 10 in Verbindung steht. Bei einer Beschädigung der Hülle 30 würde Unfiltrat durch die Kanalzweige 138, 140 und den Kontrollkanal 136 nach außen abfließen und könnte somit detektiert werden.

Der Kontrollkanal 136 kann jedoch auch an eine Druckeinrichtung angeschlossen werden. Wenn es sich bei der Druckeinrichtung um eine Überdruckeinrichtung handelt, kann beispielsweise Druckluft in die Kanäle 138, 140 eingeblasen werden, so daß die Hülle gegen die Filterzellen 22 gedrückt wird. Dadurch ist es möglich, am Ende einer Filtration eine Restfiltration durchzuführen.

Der Kontrollkanal 136 kann auch an eine Unterdruckeinrichtung angeschlossen werden, so daß der Füllvorgang zu Beginn der Filtration durch ein Ansaugen der Hülle 30 bis zur Anlage an die Gehäusewand unterstützt werden kann.

Wie in der Fig. 3 zu sehen ist, ist zwischen der Bodenplatte 12 und dem Filtermodul eine ringförmige Bodenplatte 60 angeordnet, deren radiale Abmessung im wesentlichen der Innenabmessung des Gehäusemantels 10 entspricht. Die Bodenplatte 60 weist eine radial nach außen ansteigende Fläche 66 auf, die eine Auflagefläche für die Hülle 30 bildet. Da die Hülle 30 nicht druckdicht ist, ist es wichtig, daß sich die Bodenplatte 60 möglichst nahe bis an die Innenseite des Gehäusemantels 10 erstreckt, damit die Hülle 30 im Übergangsbereich zwischen Bodenplatte und Gehäusemantel durch den Innendruck im Filtermodul nicht beschädigt wird.

Die Bodenplatte 60 besitzt einen Unfiltratkanal 62, der den Unfiltratzulauf 14 der Bodenwand 12 mit der Ventilöffnung 38 des Ventils 48 verbindet. Die ringförmige Bodenplatte 60 besitzt eine Ringaufnahme zur Aufnahme des Halteringes 34 und trägt eine mittig angeordnete Aufnahmebüchse 70 zur Aufnahme des unteren Adapters 26. Die Aufnahmebüchse 70 besitzt einen unteren Büchsenabschnitt 74 und einen radial nach außen aufgeweiteten oberen Büchsenabschnitt 72 zur Aufnahme des Adapters 26. Durch den radialen Versatz wird eine Innenschulter 76 und eine Außenschulter 78 gebildet. Mit der Außenschulter 78 liegt die Aufnahmebüchse 70 auf einer entsprechenden Fläche der Bodenplatte 60 auf. Die Innenschulter 76 dient zur Auflage des Ventilringes 102 des Adapterventils 100. Radial auswärts ist am oberen Büchsenabschnitt 72 ein Vorsprung 80 als Widerlager für den Ventilstößel 52 des Einlaßventils 48 angeordnet. Die Lage des Vorsprungs 80 ist so gewählt, daß der Ventilstößel 52 den Ventildeckel 50 nach oben drückt, so daß die Ventilöffnung 38 freigegeben wird.

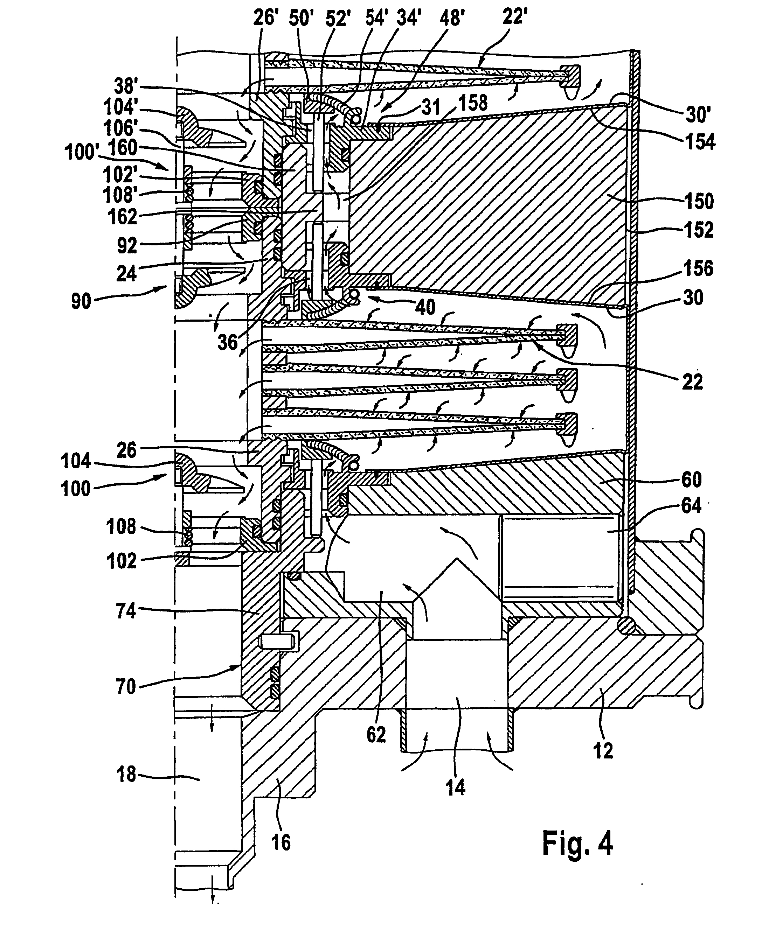

In der Figur 4 ist eine weitere Ausführungsform dargestellt, die den Einbau von zwei schematisch dargestellten Filtermodulen betrifft. Um die beiden Filtermodule miteinander verbinden zu können, ist eine Zwischenplatte 150 mit Stirnflächen 154, 156 als Anlagefläche für die Hülle 30, 30' vorgesehen. Die ringförmige Zwischenplatte 150 nimmt den unteren Haltering 34' des oberen Filtermoduls und den oberen Haltering 32 des unteren Filtermoduls auf. Die Zwischenplatte 150 erstreckt sich mit ihrer Außenumfangsfläche 152 bis in die Nähe der Innenfläche des Gehäusemantels 10. Ferner weist die Zwischenplatte 150 ein Ringelement 160 zur Aufnahme der Adapter 26' und 24 auf. Die Ventile 40 und 48' sind über einen Verbindungskanal 158 miteinander verbunden, in den ein Vorsprung 162 des Ringelementes 160 ragt, der als Widerlager für die Ventilstößel 52' und 44 dient.

### Bezugszeichen

- 1: Filtervorrichtung
- 2: Filtergehäuse
- 4: Gehäuseoberteil
- 6: Gehäusestutzen
- 8: Gehäusedeckwand
- 10: Gehäusemantel
- 12: Gehäuseboden
- 13: Ringschulter
- 14: Filtrat- oder Unfiltratzulauf
- 16: Filtrat- oder Unfiltratstutzen
- 18: Filtrat- oder Unfiltratkanal
- 19: Filtrat- oder Unfiltratraum
- 20: Filtermodul
- 22: Filterzelle
- 23: Filterschicht
- 24: oberer Adapter
- 26,26': unterer Adapter
- 28: O-Ring
- 29: Distanzring
- 30,30': Hülle
- 31: Schweißnaht
- 32: oberer Haltering
- 34,34': unterer Haltering
- 36: Ventilöffnung
- 38,38': Ventilöffnung
- 40: Ventil
- 42: Ventildeckel
- 44: Ventilstößel
- 46: Feder
- 48,48': Ventil
- 50,50': Ventildeckel
- 52,52': Ventilstößel
- 54,54': Feder
- 60: ringförmige Bodenplatte
- 62: Unfiltratkanal
- 64: Stopfen
- 66: schräge Oberfläche
- 68: Ringaufnahme
- 70: Aufnahmebüchse
- 72: oberer Büchsenabschnitt
- 74: unterer Büchsenabschnitt
- 76: innere Ringschulter
- 78: äußere Ringschulter
- 80: Vorsprung
- 90: oberes Adapterventil
- 92: Ventilring
- 93: Ringflansch
- 94: Ventilteller
- 95: Ventilöffnung
- 96: Ventilstößel
- 98: Ventilfeder
- 100,100': unteres Adapterventil
- 102,102': Ventilring
- 103,103': Ringflansch
- 104,104': Ventilteller
- 106,106': Ventilstößel
- 105: Ventilöffnung
- 108,108': Feder
- 110: Kopfplatte
- 112: untere Fläche
- 114: gekrümmte Oberfläche
- 116: Ringaufnahme
- 120: Verteilerkopf
- 122: Ringflansch
- 124: Widerlager
- 126: Ringraum
- 128a,b: Entlüftungskanal/Unfiltratraum
- 130: Auslaß
- 132: Entlüftungskanal/Filtratkanal
- 134a,b: Kanalzweig
- 136: Kontrollkanal
- 138: Kanalzweig
- 140: Kanalzweig
- 150: Zwischenplatte
- 152: Außenumfangsfläche
- 154: obere Stirnfläche
- 156: untere Stirnfläche
- 158: Verbindungskanal
- 160: Ringelement
- 162: Vorsprung

## Patentansprüche

1. Modul zum Filtrieren von Medien, insbesondere zum Filtrieren von Flüssigkeiten, mit einer oder mehreren aufeinander gestapelten Filterzellen (22), die jeweils mindestens eine Öffnung aufweisen, wobei die Öffnung der Filterzelle (22) oder die gleichartigen Öffnungen der Filterzellen zusammen mindestens einen Kanal für die Zuführung oder Abführung des zu filtrierenden Mediums bilden und wobei jede Filterzelle (22) zwei einen Innenraum begrenzende, poröse, flächige vom Medium durchströmbare Bauteile (23) aufweist, wobei der oder die Innenräume mit dem Kanal verbunden ist/sind, mit an den Enden des Kanals angeordneten Adaptern (24, 26, 26') und mit einer die Filterzellen (22) umgebenden, mediendichten Kapseleinrichtung, die mindestens eine Einlaß- oder Auslaßöffnung aufweist, **dadurch gekennzeichnet,**
- **daß** die Kapseleinrichtung eine mediendichte Hülle (30, 30') und zwei Halteringe (32, 34, 34') umfaßt,
- **daß** die Hülle (30, 30') an den Halteringen (32, 34, 34') mediendicht befestigt ist, und
- **daß** jeweils ein Haltering (32, 34, 34') an einem Adapter (24, 26, 26') angeordnet ist.

2. Modul nach Anspruch 1, **dadurch gekennzeichnet, daß** die Hülle (30, 30') aus einem flexiblen und/oder elastischen Material besteht.

3. Modul nach einem der Ansprüche 1 oder 2, **dadurch gekennzeichnet, daß** die beiden Adapter (24, 26, 26') gleich sind.

4. Modul nach einem der Ansprüche 1 bis 3, **dadurch gekennzeichnet, daß** mindestens ein Haltering (32, 34, 34') in der Einlaß- oder Auslaßöffnung (38, 38') mindestens ein Ventil (40, 48) aufweist.

5. Modul nach einem der Ansprüche 1 bis 4, **dadurch gekennzeichnet, daß** mindestens im unteren Adapter (26, 26') ein den Filtrat- oder Unfiltratkanal (18) verschließendes Adapterventil (100, 100') angeordnet ist.

6. Modul nach einem der Ansprüche 1 bis 5, **dadurch gekennzeichnet, daß** das Adapterventil (100, 100') ein Tellerventil ist.

7. Filtervorrichtung mit einem Filtergehäuse (2) und mindestens einem, in dem Gehäuse (2) angeordneten Modul, gemäß einem der Ansprüche 1 bis 6.

8. Filtervorrichtung nach Anspruch 7, wobei die Vorrichtung (1) ferner einen Einbausatz für das mindestens eine Modul umfasst, wobei das Filtergehäuse (2) einen Gehäuseboden (12) mit einem mittig angeordneten Filtrat- oder Unfiltratstutzen (16) und einem exzentrisch angeordneten Filtrat- oder Unfiltratzulauf (14), einen Gehäusemantel (10) und eine Gehäusedeckwand (8) mit einem mittig angeordneten Gehäusestutzen (6) aufweist,
und wobei der Einbausatz
- eine ringförmige Bodenplatte (60), die den Raum zwischen dem Gehäuseboden (12) und dem Filtermodul soweit ausfüllt, daß die Oberseite (66) der Bodenplatte eine Auflagefläche für die Hülle (30) bildet, wobei die Bodenplatte (60) einen Filtratauslauf oder Unfiltratkanal (62) aufweist, der den Filtrat- oder Unfiltratzulauf (14) des Gehäusebodens (12) mit der im unteren Haltering (34, 34') angeordneten Einlaß- oder Auslaßöffnung (38, 38') verbindet, und die Mittel zur Aufnahme des unteren Adapters (26, 26') und des unteren Halterings (34, 34') aufweist, und
- eine Deckplatte umfaßt, die den Raum zwischen Gehäusedeckwand (8) und Filtermodul soweit ausfüllt, daß die Unterseite der Deckplatte eine Auflagefläche für die Hülle (30, 30') bildet, und die Mittel zur Aufnahme des oberen Adapters (24) und des oberen Halteringes (32) aufweist.

9. Vorrichtung nach Anspruch 8, **dadurch gekennzeichnet, daß** die Mittel zur Aufnahme des unteren Adapters (26, 26') eine Aufnahmebüchse (70) umfassen.

10. Vorrichtung nach Anspruch 9, **dadurch gekennzeichnet, daß** die Aufnahmebüchse (70) einen Vorsprung (80) als Widerlager für einen Ventilstößel (52, 52') des im unteren Haltering (34, 34') angeordneten Ventils (48, 48') aufweist.

11. Vorrichtung nach einem der Ansprüche 8 bis 10, **dadurch gekennzeichnet, daß** die Deckplatte zweiteilig ausgebildet ist und eine ringförmigen Kopfplatte (110) und einen mittig in die Kopfplatte (110) eingesetzten Verteilerkopf (120) umfaßt.

12. Vorrichtung nach Anspruch 11, **dadurch gekennzeichnet, daß** der Verteilerkopf (120) einen Entlüftungskanal (132) für den Unfiltrat- oder Filtratkanal (18) und/oder einen Entlüftungskanal (128a, b) für den Filtrat- oder Unfiltratraum (19) und/oder einen Kontrollkanal (136) aufweist.

13. Vorrichtung nach einem der Ansprüche 8 bis 12, für den Einbau von mindestens zwei Filtermodulen, **dadurch gekennzeichnet, daß** zwischen jeweils zwei Filtermodulen eine Zwischenplatte (150) mit einer Öffnung angeordnet ist, die den Raum zwischen den beiden Filtermodulen soweit ausfüllt, daß die beiden Stirnflächen (154, 156) jeweils eine Auflagefläche für die Hüllen (30, 30') der Filtermodule bilden und die mindestens einen Verbindungskanal (158) aufweist, der die Ventilöffnungen (36, 38, 38') der in den Halteringen (32, 34, 34') der beiden Filtermodule befindlichen Ventile (40, 48, 48') miteinander verbindet.

14. Filtervorrichtung nach einem der Ansprüche 8 bis 13, **dadurch gekennzeichnet, daß** die Hülle (30, 30') derart dimensioniert ist, daß sie während des Filtrationsbetriebes an der Wand des Filtergehäuses (2) und den benachbarten Komponenten (60, 110, 150) des Einbausatzes anliegt.

15. Filtervorrichtung nach einem der Ansprüche 12 bis 14, **dadurch gekennzeichnet, daß** der Kontrollkanal (136) an eine Druckeinrichtung angeschlossen ist.

## Claims

1. Module for filtering media, particularly for filtering liquids, with one or more filter cells (22), which are stacked one on top of the other and which each have at least one opening, the opening of the filter cell (22) or the openings of similar type of the filter cells together forming at least one channel for the supply or discharge of the medium to be filtered, and each filter cell (22) having two porous, sheet-like components (23), which delimit an interior space and through which the medium may flow, the inner space or spaces being connected to the channel, with adapters (24,26,26') arranged at the ends of the channel, and with a media-tight enclosure device, which surrounds the filter cells (22) and which has at least one inlet or outlet opening,
**characterized in that**
- the enclosure device includes a media-tight envelope (30,30') and two retaining rings (32,34,34'),
- the envelope (30,30') is attached to the retaining rings (32,34,34') in a media-tight fashion, and
- one retaining ring (32,34,34') is respectively arranged on an adapter (24,26,26').

2. Module according to Claim 1, **characterized in that** the envelope (30,30') consists of a flexible and/or elastic material.

3. Module according to Claim 1 or 2, **characterized in that** the two adapters (24,26,26') are identical.

4. Module according to any one of Claims 1 to 3, **characterized in that** at least one retaining ring (32,34,34') has at least one valve (40,48) in the inlet or outlet opening (38,38').

5. Module according to any one of Claims 1 to 4, **characterized in that** an adapter valve (100,100') closing the filtrate or nonfiltrate channel (18) is arranged at least in the lower adapter (26,26').

6. Module according to any one of Claims 1 to 5, **characterized in that** the adapter valve (100,100') is a disk valve.

7. Filter device comprising a filter housing (2) and at least one module according to any one of Claims 1 to 6 arranged in the housing (2).

8. Filter device according to Claim 7, with the device (1) further comprising an installation set for the at least one module, the filter housing (2) having a housing base (12) with a filtrate or nonfiltrate connection (16) arranged in the centre and an eccentric filtrate or nonfiltrate supply (14), a housing shell (10), and a housing cover wall (8) with a housing connection (6) arranged in the centre, and the installation set comprising
- an annular base plate (60), which fills up the space between the housing base (12) and the filter module to such an extent that the upper side (66) of the base plate forms a contact surface for the envelope (30), the base plate (60) having a filtrate outlet or nonfiltrate channel (62), which connects the filtrate or nonfiltrate supply (14) of the housing base (12) to the inlet or outlet opening (38,38') arranged in the lower retaining ring (34,34'), and having means for receiving the lower adapter (26,26') and the lower retaining ring (34,34'), and
- a cover plate, which fills out the space between housing cover wall (8) and filter module to such an extent that the lower side of the cover plate forms a contact surface for the envelope (30,30'), and which has means for receiving the upper adapter (24) and the upper retaining ring (32).

9. Device according to Claim 8, **characterized in that** the means for receiving the lower adapter (26,26') include a receiver bushing (70).

10. Device according to Claim 9, **characterized in that** the receiver bushing (70) has a projection (80) as a stop for a valve tappet (52,52') of the valve (48,48') arranged in the lower retaining ring (34,34').

11. Device according to any one of Claims 8 to 10, **characterized in that** the cover plate is formed in two parts and includes an annular head plate (110) and a distributor head (120) inserted in the centre in the head plate (110).

12. Device according to Claim 11, **characterized in that** the distributor head (120) has a ventilation channel (132) for the nonfiltrate or filtrate channel (18) and/or a ventilation channel (128a,b) for the filtrate or nonfiltrate chamber (19) and/or a control channel (136).

13. Device according to any one of Claims 8 to 12, for the installation of at least two filter modules, **characterized in that** between every two filter modules there is an intermediate plate (150) with an opening, which fills up the space between the two filter modules to such an extent that the two end surfaces (154,156) each have a contact surface for the envelopes (30,30') of the filter modules, and which has at least one connection channel (158) which connects the valve openings (36,38,38') of the valves (40,48,48') located in the retaining rings (32,34,34') of the two filter modules to each other.

14. Filter device according to any one of Claims 8 to 13, **characterized in that** the envelope (30,30') is dimensioned such that during filtration it contacts the wall of the filter housing (2) and the adjacent components (60,110,150) of the installation set.

15. Filter device according to any one of Claims 12 to 14, **characterized in that** the control channel (136) is connected to a pressure device.

## Revendications

1. Module pour filtrer des fluides, en particulier pour filtrer des liquides, comportant une ou plusieurs cellules de filtre (22) empilées les unes sur les autres qui présentent chacune au moins une ouverture, l'ouverture de la cellule de filtre (22) ou les ouvertures de même type des cellules de filtre formant conjointement au moins un canal pour l'alimentation ou l'évacuation du fluide à filtrer, et chaque cellule de filtre (22) comprenant deux composants de surface poreux (23) délimitant un volume intérieur et susceptibles d'être traversés par le fluide, le ou les volumes intérieurs étant relié(s) au canal, comportant des adaptateurs (24, 26, 26') agencés aux extrémités du canal et comportant un dispositif d'encapsulage étanche aux fluides et entourant les cellules de filtre (22), dispositif qui présente au moins une ouverture d'entrée ou de sortie,
**caractérisé en ce que**
- le dispositif d'encapsulage comprend une enveloppe (30, 30') étanche aux fluides ainsi que deux bagues de maintien (32, 34, 34'),
- l'enveloppe (30, 30') est fixée de façon étanche aux fluides sur les bagues de maintien (32, 34, 34'), et
- une bague de maintien respective (32, 34, 34') est agencée sur un adaptateur (24, 26, 26').

2. Module selon la revendication 1, **caractérisé en ce que** l'enveloppe (30, 30') est constituée d'un matériau flexible et/ou élastique.

3. Module selon l'une ou l'autre des revendications 1 et 2, **caractérisé en ce que** les deux adaptateurs (24, 26, 26') sont égaux.

4. Module selon l'une des revendications 1 à 3, **caractérisé en ce qu'**au moins une bague de maintien (32, 34, 34') dans l'ouverture d'entrée ou de sortie (38, 38') comprend au moins une valve (40, 48).

5. Module selon l'une des revendications 1 à 4, **caractérisé en ce qu'**une valve d'adaptateur (100, 100') refermant le canal à produit filtré ou à produit non filtré (18) est agencée au moins dans l'adaptateur inférieur (26, 26').

6. Module selon l'une des revendications 1 à 5, **caractérisé en ce que** la valve d'adaptateur (100, 100') est une valve à siège plan.

7. Dispositif de filtre comportant un boîtier de filtre (2) et au moins un module selon l'une des revendications 1 à 6 agencé dans le boîtier (2).

8. Dispositif de filtre selon la revendication 7, le dispositif (1) comprenant en outre un ensemble de pièces de montage pour ledit au moins un module, dans lequel le boîtier de filtre (2) comprenant un fond de boîtier (12) avec un manchon à produit filtré ou à produit non filtré (16) agencé au milieu ainsi qu'une conduite d'afflux de produit filtré ou de produit non filtré (14) agencée de façon excentrique, une jupe de boîtier (10) et une paroi de couverture de boîtier (8) avec un manchon de boîtier (6) agencé au milieu, et dans lequel l'ensemble de pièces de montage comprend
- une plaque de fond annulaire (60) qui remplit l'espace entre le fond de boîtier (12) et le module de filtre aussi loin que le côté supérieur (66) de la plaque de fond forme une surface d'appui pour l'enveloppe (30), la plaque de fond (60) présentant une sortie de produit filtré ou un canal de produit non filtré (62) qui relie l'afflux de produit filtré ou de produit non filtré (14) du fond de boîtier (12) à l'ouverture d'entrée ou de sortie (38, 38') ménagée dans la bague de maintien inférieure (34, 34'), et qui comprend des moyens pour recevoir l'adaptateur inférieur (26, 26') et la bague de maintien inférieure (34, 34'), et
- une plaque de couverture qui remplit l'espace entre la paroi de couverture de boîtier (8) et le module de filtre aussi loin que le côté inférieur de la plaque de couverture forme une surface d'appui pour l'enveloppe (30, 30'), et qui comprend des moyens pour recevoir l'adaptateur supérieur (24) et la bague de maintien supérieure (32).

9. Dispositif selon la revendication 8, **caractérisé en ce que** les moyens pour recevoir l'adaptateur inférieur (26, 26') comprennent une douille de réception (70).

10. Dispositif selon la revendication 9, **caractérisé en ce que** la douille de réception (70) comprend une saillie (80) à titre de contre-butée pour un poussoir de valve (52, 52') de la valve (48, 48') agencée dans la bague de maintien inférieure (34, 34').

11. Dispositif selon l'une des revendications 8 à 10, **caractérisé en ce que** la plaque de couverture est réalisée en deux pièces et comprend une plaque de tête annulaire (110) et une tête de répartition (120) mise en place au milieu dans la plaque de tête (110).

12. Dispositif selon la revendication 11, **caractérisé en ce que** la tête de répartition (120) comprend un canal de mise à l'air (132) pour le canal à produit non filtré ou à produit filtré (18) et/ou un canal de mise à l'air (128a, b) pour la chambre à produit filtré ou à produit non filtré (19) et/ou un canal de contrôle (136).

13. Dispositif selon l'une des revendications 8 à 12 pour le montage d'au moins deux modules de filtre, **caractérisé en ce qu'**une plaque intermédiaire (150) présentant une ouverture est agencée entre deux modules de filtre respectifs, plaque qui remplit l'espace entre les deux modules de filtre aussi loin que les deux surfaces frontales (154, 156) forment chacune une surface d'appui pour les enveloppes (30, 30') des modules de filtre, et qui comprend au moins un canal de liaison (158) qui relie mutuellement les ouvertures de valve (36, 38, 38') dans les valves (40, 48, 48') situées dans les bagues de maintien (32, 34, 34') des deux modules de filtre.

14. Dispositif de filtre selon l'une des revendications 8 à 13, **caractérisé en ce que** l'enveloppe (30, 30') est dimensionnée de manière à prendre appui, pendant le fonctionnement de filtration, contre la paroi du boîtier de filtre (2) et contre les composants voisins (60, 110, 150) de l'ensemble de pièces de montage.

15. Dispositif de filtre selon l'une des revendications 12 à 14, **caractérisé en ce que** le canal de contrôle (136) est branché à un dispositif à pression.
